# FASCICULE DE BREVET EUROPEEN

(11) **EP 4 053 444 B1**
(45) Date de publication et mention de la délivrance du brevet: **12.07.2023**
(21) Numéro de dépôt: 22154399.4
(22) Date de dépôt: 01.02.2022
(51) Int. Cl.: F17C 5/00

(54) **PROCÉDÉ DE GESTION DE L'APPROVISIONNEMENT EN HYDROGÈNE DE VÉHICULES**
VERFAHREN ZUR STEUERUNG DER WASSERSTOFFVERSORGUNG VON FAHRZEUGEN
METHOD FOR MANAGING THE HYDROGEN SUPPLY OF VEHICLES

(30) Priorité: 05.03.2021 FR 2102143
(43) Date de publication de la demande: 07.09.2022
(73) Titulaire: Lojelis Holding, 63130 Royat (FR)
(72) Inventeur: JOURDY, Sylvain, 63130 ROYAT (FR)
(74) Mandataire: Dennemeyer & Associates S.A.

(56) Documents cités:
- FR-A1- 2 984 254
- FR-A1- 3 082 276
- US-A1- 2012 111 447
- US-A1- 2019 016 312
- US-A1- 2019 255 952

## Description

La présente invention concerne un procédé de gestion de l'approvisionnement en hydrogène de véhicules.

Le terme véhicule regroupe ici tout type de véhicules, terrestres, ferroviaires, maritimes ou aériens. A titre d'exemples non limitatifs on peut citer des voitures, des camions, des deux roues, des engins agricoles, des engins de travaux publics, des bus, des avions, des trains, des navires, des péniches ou autres. Dans ces véhicules, au moins la force motrice nécessaire au déplacement du véhicule, voir également la force motrice pour actionner au moins un outil monté sur le véhicule, est fournie par un moteur électrique. Une pile à combustible ou pile à hydrogène installée sur le véhicule permet de produire l'électricité. De la sorte, ce type de véhicule s'affranchit, au moins partiellement, des recharges en électricité sur une borne fixe de recharge.

L'hydrogène est un élément chimique qui est présent dans de nombreux composés naturels, cela en quantité importante mais qui n'existe pratiquement pas à l'état moléculaire dans la nature. Il faut donc le produire par divers procédés tels que le reformage ou gazéification d'hydrocarbures comme le méthane, par l'électrolyse de l'eau ou par la dissociation thermochimique de l'eau ou de biomasse. Le choix du procédé se fait en fonction de nombreux paramètres : entre autres le type d'énergie primaire nécessaire, le rendement, la présence d'impuretés, les coproduits ou déchets générés. La quasi-totalité de l'hydrogène aujourd'hui produite provient majoritairement du reformage de gaz naturel. L'électrolyse de l'eau n'est utilisée que pour des productions de petites ou moyennes capacités, si l'électricité est bon marché et/ou si une pureté élevée de l'hydrogène produit est requise. Quel que soit son mode de production l'hydrogène est toujours obtenu à l'état gazeux. L'état liquide est obtenu par détentes successives du gaz, jusqu'à une température de moins 253°C. Le maintien de l'état liquide de l'hydrogène à cette température nécessite d'importants moyens de production de froid. Aussi, la distribution et le stockage de l'hydrogène, au moins pour son usage dans les véhicules, s'effectue majoritairement sous forme gazeuse, généralement à des pressions de 35 MPa ou 70 MPa qui sont les pressions retenues actuellement par les constructeurs de véhicules automobiles. Le stockage et l'utilisation sous forme liquide sont réservés à de grosses installations et à des véhicules dits lourds tels que des camions ou des bus. Actuellement, il existe deux types de stations de distribution d'hydrogène pour les véhicules : celles distribuant de l'hydrogène à partir d'un ou plusieurs réservoir(s) et approvisionnées par camions, voies ferrées, voies maritimes ou gazoducs, cela de manière similaire aux stations distributrices d'essence actuelles et celles disposant d'une unité autonome de production d'hydrogène. Dans tous les cas, les contraintes techniques de stockage et/ou de production d'hydrogène sont importantes, tant en termes d'équipements, de protocole de production, de distribution et/ou de stockage que de temps de mise en oeuvre. Ainsi, il n'est pas aussi simple et rapide de réapprovisionner une station de distribution en hydrogène ou de réaliser un cycle de production d'hydrogène que de réapprovisionner une station distribuant des hydrocarbures.

Par ailleurs, lors de la distribution, donc lors du remplissage du réservoir d'hydrogène du véhicule, il se produit une détente du gaz, l'hydrogène étant toujours présent dans la station de distribution à une pression supérieure à celle d'utilisation dans le véhicule, 35 MPa ou 70 MPa, pour que le remplissage du réservoir du véhicule s'effectue essentiellement par différence de pression. La détente de l'hydrogène contenu dans le réservoir de la station lors du remplissage du réservoir du véhicule produit un échauffement du gaz, le volume occupé par le gaz variant, selon la loi de Joule-Thomson. Lors de ce remplissage, la pression de l'hydrogène dans le réservoir du véhicule augmente suffisamment rapidement pour que cette compression d'hydrogène dans le réservoir du véhicule soit considérée comme adiabatique, les échanges de chaleur n'ayant pas le temps de se produire. Il s'ensuit une élévation de température de l'hydrogène dans le réservoir du véhicule qui peut atteindre plusieurs dizaines de degrés Celsius. Cette montée en température est fonction de plusieurs facteurs, en particulier la vitesse de remplissage du réservoir du véhicule et la différence de pression entre les réservoirs de la station et du véhicule. Lorsque la température du réservoir du véhicule aura descendue et sera revenue à la température ambiante, la pression de l'hydrogène dans le réservoir du véhicule aura diminuée, selon la loi de Gay-Lussac. Ainsi, la pression finale dans le réservoir du véhicule peut être inférieure à celle initialement prévue. Pour garantir la délivrance de la quantité souhaitée et maintenir autant que possible la pression finale de l'hydrogène dans le réservoir du véhicule au niveau initial, il est fréquent que l'hydrogène stocké dans la station distributrice soit refroidi aux environs de - 40°C afin que le réchauffement au cours du remplissage du réservoir du véhicule amène l'hydrogène dans le réservoir au voisinage de la température ambiante, pour autant que les conditions climatiques ne soient pas extrêmes.

Dans une station de distribution, lorsque l'électricité est facilement disponible soit via le réseau électrique soit via des sources alternatives telles que l'éolien ou le photovoltaïque, l'hydrogène peut être produit sur place à l'état gazeux par exemple par électrolyse de l'eau, avant compression, stockage temporaire et distribution. L'oxygène issu de l'électrolyse de l'eau est un sous-produit qui, avantageusement, est valorisé plutôt que rejeté dans l'atmosphère. La production d'hydrogène par la station de distribution est particulièrement adaptée pour des installations de tailles relativement faibles et destinées à approvisionner des véhicules légers. Néanmoins un cycle complet de production d'hydrogène prête à être distribuée nécessite un certain temps.

Ainsi, le risque existe qu'une station de distribution soit en manque d'hydrogène à distribuer, cela pour un temps plus ou moins long selon le fait que la station est approvisionnée à partir d'une installation de production externe ou qu'elle produit elle-même l'hydrogène. Ce risque est d'autant plus pénalisant pour l'utilisateur que le nombre de stations de distribution d'hydrogène est encore limité et donc que l'utilisateur peut ne pas disposer d'une autonomie suffisante pour rejoindre une station plus ou moins éloignée et disposant de suffisamment d'hydrogène, ou du moins d'une quantité suffisante pour que l'utilisateur puisse poursuivre son trajet et que cet hydrogène soit disponible dans un délai acceptable par l'utilisateur. Par ailleurs, tant la complexité des techniques de production et /ou de stockage que la présence de pics de production et/ou de stockage induit des coûts de production et de distribution d'hydrogène élevés. On connait par US-A-2019255952 une solution dans laquelle les stations de distribution d'hydrogène communiquent avec les véhicules. En fonction des paramètres du véhicule transmis à la station, celle-ci adapte sa production et fournit au véhicule sa géolocalisation pour que le conducteur puisse se ravitailler. avec un tel dispositif, on part du principe que la station est toujours en mesure de ravitailler le véhicule puisqu'elle doit adapter sa production en fonction des véhicules situés à proximité et de leurs besoins estimés. En revanche, le conducteur ne dispose pas de toutes les informations sur les conditions de distribution ni sur le fait que, lorsqu'il sera à la station, celle-ci sera toujours en mesure de le fournir.

Il existe donc un besoin d'une part pour planifier au mieux l'approvisionnement en hydrogène d'une station de distribution et d'autre part pour planifier le ravitaillement en hydrogène d'un utilisateur à partir de la station distributrice. C'est à ce double besoin que se propose de répondre l'invention en offrant un procédé de gestion de l'approvisionnement en hydrogène de véhicules optimisant la production ou le réassort en hydrogène des stations de distribution ainsi que l'approvisionnement en hydrogène de véhicules, avec une maitrise des coûts de production et d'achat, tant pour les stations de distribution et les utilisateurs, ces derniers pouvant se rendre à la station de distribution en étant certains d'obtenir de l'hydrogène dans des conditions optimales souhaitées.

A cet effet, l'invention a pour objet un procédé de gestion de l'approvisionnement en hydrogène de véhicules en déplacement à partir d'hydrogène distribué par des stations distributrices, comprenant les étapes:
- a) collecter, par au moins deux capteurs embarqués dans un véhicule, au moins deux paramètres relatifs au fonctionnement et à la conduite du véhicule lors de son déplacement dont au moins la géolocalisation du véhicule et ses besoins en hydrogène,
- b) transmettre les paramètres relatifs au moins aux besoins en hydrogène du véhicule et à sa géolocalisation à un module de commande,
- c) collecter par au moins un capteur présent dans au moins une station distributrice d'hydrogène, au moins un paramètre relatif à l'hydrogène disponible dans la station distributrice d'hydrogène,
- d) transmettre au moins ce paramètre relatif à l'hydrogène disponible dans la station distributrice d'hydrogène au module de commande, caractérisé en ce qu'il comprend au moins les étapes suivantes :
- e) identifier, par le module de commande, au moins une station distributrice d'hydrogène pouvant ravitailler le véhicule lors de son déplacement,
- f) informer l'utilisateur du véhicule sur au moins une station distributrice d'hydrogène pouvant ravitailler le véhicule lors de son déplacement et des conditions de ravitaillement en hydrogène dans la station distributrice d'hydrogène identifiée.

Ainsi, grâce à l'invention on dispose d'un moyen de suivi en temps réel des disponibilités en hydrogène dans les stations distributrices et des besoins en hydrogène des véhicules susceptibles de se ravitailler dans les stations. L'invention permet ainsi à l'utilisateur d'optimiser son ravitaillement en hydrogène non seulement en fonction de son trajet, de sa conduite mais également en fonction des disponibilités en hydrogène des stations à proximité.

Selon des aspects avantageux mais non obligatoires de l'invention, un tel procédé peut comprendre une ou plusieurs des étapes suivantes :
Des capteurs de collecte de paramètres relatifs à la charge du véhicule, la pression des pneus, la présence d'une remorque, l'accélération du véhicule sont embarqués dans le véhicule.

le module de commande est hébergé dans un serveur distant des stations distributrices d'hydrogène.

Le module de commande est basé sur une Intelligence Artificielle.

Lors de l'étape f), une offre de prix de l'hydrogène adaptée aux besoins de l'utilisateur et à la disponibilité de l'hydrogène dans la station suggérée est fournie à l'utilisateur.

Lors de l'étape f), l'offre de prix tient compte de la présence d'un forfait et des préférences de l'utilisateur concernant le choix de la station distributrice d'hydrogène.

lors de l'étape f), l'utilisateur est informé lorsqu'il se trouve à une distance définie d'une station distributrice d'hydrogène.

Après l'étape f), l'utilisateur informe le module de commande de son choix.

Apres l'étape f), l'utilisateur a la possibilité d'informer la station distributrice retenue pour le ravitaillement et de prendre rendez-vous.

L'invention sera mieux comprise et d'autres avantages de celle-ci apparaitront plus clairement à la lecture de la description qui va suivre, donnée uniquement à titre d'exemple non limitatif et faite en référence au dessin annexé dans lequel:

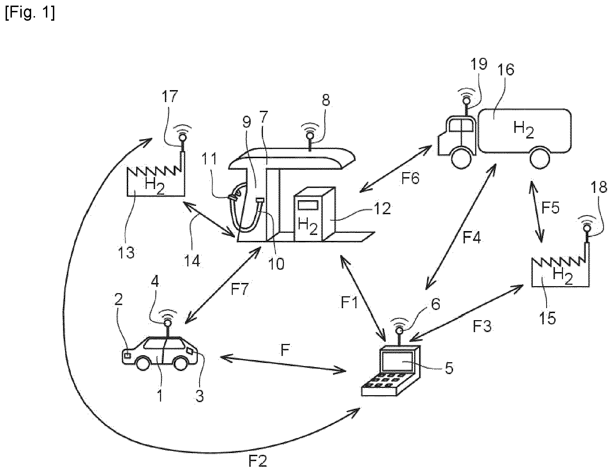

[Fig.1] est une représentation schématique simplifiée d'un mode de réalisation de l'invention.

La figure 1 est une illustration schématique simplifiée d'un mode de réalisation de l'invention. La mise en oeuvre du procédé comprend au moins un véhicule 1. Ici, le véhicule 1 est un véhicule automobile, de type voiture particulière. En variante, il peut s'agir d'un véhicule de transport tel qu'un bus, un taxi, un camion, un engin agricole, de travaux publics, d'un véhicule ferroviaire, d'un navire, d'un véhicule aérien. Il peut donc s'agir de tout type de véhicule pour autant que le véhicule dispose d'un organe moteur, pour son déplacement et/ou pour actionner au moins un outil monté sur le véhicule tel qu'un bras de levage, un hayon, une benne basculante ou autre, utilisant l'hydrogène pour son fonctionnement. Dans tous les cas, le véhicule est équipé, de manière amovible ou définitive, d'au moins deux capteurs, schématiquement illustrés par la référence 2, permettant de collecter au moins deux paramètres relatifs au véhicule 1 lors de son déplacement dont au moins un paramètre relatif aux besoins en hydrogène du véhicule en déplacement et à sa géolocalisation. Il s'agit, par exemple, de capteurs tels qu'un capteur de vitesse relié au tachymètre du véhicule et d'un capteur de la quantité d'hydrogène disponible dans le véhicule, par exemple par une mesure de la pression dans le réservoir d'hydrogène ou par un autre paramètre représentatif de la quantité d'hydrogène restant dans le véhicule. D'autres capteurs peuvent être embarqués dans le véhicule afin de collecter d'autres paramètres. Il peut s'agir de capteurs de pression installés dans les sièges et permettant de connaitre le nombre de personnes à bord, donc estimer la charge du véhicule. Il peut s'agir d'au moins un accéléromètre fournissant des indications sur le type de conduite du véhicule, donc de facto sur la consommation en hydrogène. Des capteurs indiquant l'état de l'organe moteur, la pression des pneus, la présence d'une remorque ou d'une caravane ou, d'une manière générale, tout type de capteur adapté pour collecter un paramètre affectant la conduite du véhicule et sa consommation en hydrogène peut être prévu.

En plus du ou des capteur(s) 2, le véhicule 1 est donc équipé d'un moyen de géolocalisation, schématiquement illustré par la référence 3. Il peut s'agir soit d'un organe de transmission relié au GPS équipant le véhicule 1 soit d'un GPS dédié, amovible ou non, embarqué sur le véhicule 1. En variante, d'autres moyens de géolocalisation sont prévus. Il s'agit par exemple de balises utilisant les réseaux de téléphonie, les réseaux 4G/5G, les ondes radios ou autres.

Le véhicule 1 est également équipé d'un organe de communication, référencé 4, qui permet d'échanger des informations, donc d'en émettre et d'en recevoir, avec au moins un module de commande 5 constitutif des éléments de mise en oeuvre du procédé objet de l'invention. Le module 5 est également équipé d'un organe de communication 6. Le module 5 est avantageusement situé à distance, par exemple, chez un gestionnaire de stations distributrices, un gestionnaire d'une flotte de véhicules ou un prestataire spécialisé.

Au moins une station distributive d'hydrogène, référencée 7 et constitutive des éléments de mise en oeuvre du procédé, est également pourvue d'un organe de communication 8, Les organes de communication 4, 6 et 8 utilisent des technologies de transmission connues en soi : Wi-Fi, réseaux de téléphonie, réseaux 4G/5G, ondes radio, liaison satellite ou autres.

La station distributrice d'hydrogène 7 comprend au moins un organe d'alimentation 9 en hydrogène d'un véhicule 1. Un tel organe 9 comprend avantageusement au moins un tuyau flexible 10 et un organe de raccordement 11 au réservoir, non illustré, du véhicule 1. Un tel organe 11 est connu en soi. Une station 7 peut être équipée de plusieurs organes 9. La station 7 comprend également un organe de quantification, référencée 12, permettant de connaitre la quantité exacte d'hydrogène délivrée par la station 7 et fournie au véhicule 1 par l'organe d'alimentation 9. Avantageusement, un tel organe 12 utilise au moins un capteur placé sur l'organe de raccordement 11 et/ou sur le tuyau flexible 10 permettant de mesurer une quantité d'hydrogène délivrée, quel que soit la température ambiante, la température initiale de l'hydrogène et/ou la pression initiale et/ou d'alimentation en hydrogène. En variante, la station peut distribuer une autre source d'énergie, en complément de l'hydrogène. par exemple en énergie électrique via une ou plusieurs bornes de rechargement et/ou en gaz et/ou en GPL. On conçoit également qu'une telle station 7 puisse offrir d'autres services que l'alimentation en énergie, par exemple des services de lavage, de distribution de produits liés à l'automobile ou des services pour le conducteur comme de la restauration.

.Comme cela ressort de la figure 1, la station distributrice 7 est ici alimentée en hydrogène par une installation de production 13 intégrée à la station 7 ou du moins suffisamment proche pour être reliée directement à cette dernière par un gazoduc 14. En variante, L'hydrogène est produit dans une installation de production d'hydrogène distante 15 permettant d'alimenter plusieurs stations 7. Le transport de l'hydrogène entre l'installation 15 et la station 7 est effectué par des moyens connus, par exemple par camion-citerne 16. Dans tous les cas, les installations de production d'hydrogène 13, 15 et le moyen de transport 16 sont également équipés d'organes de communication, respectivement 17, 18 et 19. On conçoit que les organes de communication 4, 6, 17, 18 et 19 peuvent utiliser des technologies identiques ou non, par exemple selon les distances à couvrir et/ou le type de données à transmettre et/ou recevoir.

Les diverses étapes du procédé sont maintenant décrites en référence aux éléments précédemment décrits. Pour plus de lisibilité, en accord avec la figure 1, le procédé sera décrit pour un véhicule, une station distributrice, une installation de production d'hydrogène intégrée à la station, une installation de production d'hydrogène distante et un moyen de livraison. On conçoit qu'un module de commande peut être en relation avec plusieurs dizaines voire centaines de station distributrices, d'installations, de moyens de livraison et plusieurs centaines ou milliers de véhicules. Par ailleurs plusieurs modules de commande peuvent coopérer ensemble et/ou être gérer par une unité de commande centrale, par exemple à l'échelle d'un pays, par un producteur d'hydrogène ou un exploitant de stations distributrices.

Lorsqu'un véhicule 1 est actif et en déplacement, donc lorsque ses divers organes sont en configuration actives, typiquement lorsque le moteur est en marche et que les organes sont alimentés en électricité, sa géolocalisation est automatiquement effectuée par le capteur 3. Simultanément ou de façon concomitante, les capteurs 2 sont en position active et collectent au moins des données relatives d'une part à la quantité d'hydrogène disponible dans le réservoir du véhicule et d'autre part une information relative à la vitesse du véhicule. Si ces informations suffisent à estimer, par un calcul simple, une autonomie basée sur la consommation moyenne, théorique ou basée sur l'historique du véhicule, d'autres capteurs 2 permettent d'affiner cette estimation. Pour cela, comme indiqué précédemment, on prend en compte les conditions de conduite, la charge du véhicule et, si besoin, d'autres paramètres comme les conditions de circulation par exemple le trafic routier, la météo, l'état de la route, l'état et la pression des pneus ou autres. Dans tous les cas, les données collectées par les capteurs 2, 3 sont au moins transmises par les organes de communication 8 et 6 au module de commande 5, selon la double flèche F. Selon un mode de réalisation, avantageux ces données sont également affichées dans le véhicule, par exemple via l'ordinateur du véhicule ou via un ordinateur dédié. On conçoit que les données peuvent être stockées soit dans le véhicule 1 et/ou le module de commande 5 voir dans un serveur distant dédié, par exemple hébergé dans l'informatique en nuage ou cloud. Dans tous les cas, les données sont exploitées, avantageusement, par une Intelligence Artificielle.

Des données relatives à la quantité d'hydrogène disponible dans au moins une station distributrice 7 sont également transmises par l'organe de communication 8 au module de commande 5, selon la double flèche F1. Ces données comprennent non seulement la quantification du stock d'hydrogène mais également les prévisions de réassort en hydrogène de la station 7. Il peut s'agir de la production d'hydrogène en cours ou prévue par l'installation de production 13. Ces données sont également fournies, par l'organe de communication 17 au module de commande 5 selon la double flèche F2. Lorsque la production d'hydrogène est distante de la station 7, ces données relatives à la production sont transmises par l'organe de communication 18 de l'installation 15 au module de commande 5 selon la double flèche F3. Les informations relatives à la livraison d'hydrogène par le moyen de livraison 16 sont également transmis par le moyen de communication 19 au module de commande 5 selon la double flèche F4. En variante, on conçoit qu'une station 7 produisant son hydrogène puisse, si besoin, soit être alimentée par un camion 16 soit fournir de l'hydrogène à une autre station, le transport se faisant également par camion 16.

Comme cela ressort de la figure 1, le moyen de livraison 16 communique également, selon les doubles flèches F5 et F6 avec, respectivement, l'installation de production 15 dans laquelle il a pris l'hydrogène et avec la station distributrice 7 dans laquelle il doit livrer l'hydrogène. De la sorte, il est possible d'optimiser les livraisons, en termes de délai, de parcours et/ou de quantité d'hydrogène à livrer.

Dans tous les cas, ces diverses données fournies par le véhicule 1, les installations de production 13 et 15, le moyen de livraison 16 et la station distributrice 7 sont prises en compte par le module de commande 5. Ce dernier, par Intelligence Artificielle, identifie au moins une station distributrice 7 comme étant la plus pertinente pour réapprovisionner un véhicule, en termes de distance, quantité d'hydrogène et conditions de distribution, en particulier les délais de remplissage. Ces informations sont transmises au véhicule 1 si ce dernier souhaite se ravitailler. Avantageusement, le module de commande 5 propose plusieurs stations 7 et associe à celles-ci une offre de prix d'achat de l'hydrogène, par exemple au kilo. Si l'utilisateur du véhicule 1 ne souhaite pas suivre la proposition de ravitaillement en hydrogène proposée par le module de commande 5, alors la proposition de prix sera réévaluée lorsque l'utilisateur souhaitera se ravitailler. Avantageusement, suite à la proposition de ravitaillement émise par le module 5, l'utilisateur, par exemple, par une commande dédiée tactile ou vocale, indique son choix au module 5 et/ou à la station 7 concernée. Grâce à l'invention, il existe un échange permanent d'informations entre le véhicule, et donc son conducteur, et la station 7. ceci permet non seulement d'optimiser la production d'hydrogène mais d'optimiser les déplacements du véhicule 1, le conducteur pouvant aisément prendre un rendez-vous pour son ravitaillement, en ayant la garantie que de l'hydrogène est disponible et que son ravitaillement s'effectuera dans de bonnes conditions, rapidement et à un tarif maitrisé.

Dans le mode de réalisation illustré à la figure 1, le véhicule 1 communique également directement avec la station 7, selon la double flèche F7. Une telle communication peut se faire soit avec une ou un groupe de stations 7 données, par exemple dans le cas d'un abonnement ou d'un forfait de fourniture d'hydrogène ou pour une ou des stations préférées et fréquemment utilisées, soit avec toutes stations 7 se trouvant dans une zone déterminée autour du véhicule 1 en déplacement, soit dans plusieurs de ces cas, successivement selon la position du véhicule 1. Dans tous les cas, une telle communication directe entre la station 7 et le véhicule 1 permet à ce dernier d'informer la station de sa venue et, par exemple, de prendre un rendez-vous ou d'indiquer un créneau horaire. La station peut ainsi informer le véhicule de tout changement concernant la disponibilité en hydrogène et également planifier la production et la distribution d'hydrogène.

Dans un mode de réalisation, les informations relatives à la disponibilité en hydrogène sont actualisées régulièrement et fournies, périodiquement ou en permanence, au véhicule 1, celui-ci disposant ainsi en permanence des informations relatives à un ravitaillement en hydrogène. En variante, ces informations ne sont disponibles qu'à partir d'un seuil d'hydrogène restant dans le véhicule soit choisi par le constructeur du véhicule 1 soit par l'utilisateur du véhicule 1 soit défini par l'Intelligence Artificielle embarquée dans le module de commande 5 selon l'offre et les besoins en hydrogène à un instant donné. En variante, les informations sont transmises au véhicule lorsque ce dernier est à une distance donnée d'une station 7.

Dans un mode de réalisation, l'utilisateur dispose d'un forfait ponctuel ou d'un abonnement auprès d'un ou plusieurs fournisseurs d'hydrogène et dans ce cas, la proposition fournie par le module de commande 5 prend en compte ce paramètre, privilégiant dans l'offre de prix le ou les fournisseurs(s) concerné(s).

Le module de commande 5 étant basé sur l'Intelligence Artificielle, il existe en permanence un apprentissage relatif au véhicule, à la production d'hydrogène permettant d'optimiser la production et la distribution d'hydrogène.

Dans un mode de réalisation avantageux, d'autres informations relatives au véhicule 1, son déplacement, sa conduite ou à la station distributrice 7 sont transmises, volontairement ou automatiquement, au module de commande 5. Ces informations concernent par exemple la sécurité du véhicule ou des utilisateurs du véhicule, l'état de fonctionnement du moteur, de la station distributrice. Le module de commande peut alors initier des actions correctrices auprès du véhicule 1 et/ou de la station 7 et/ou déclencher des alarmes visuelles et/ou sonores et/ou déclencher des actions auprès de tiers, typiquement contacter des services de secours, de maintenance des stations 7 ou de réparation de véhicules 1.

## Revendications

1. Procédé de gestion de l'approvisionnement en hydrogène de véhicules (1) en déplacement à partir d'hydrogène distribué par des stations distributrices (7), **caractérisé en ce qu'**il comprenant les étapes :
- a) collecter, par au moins deux capteurs (2, 3) embarqués dans un véhicule (1), au moins deux paramètres relatifs au fonctionnement et à la conduite du véhicule (1) lors de son déplacement dont au moins la géolocalisation du véhicule (1) et ses besoins en hydrogène,
- b) transmettre les paramètres relatifs au moins aux besoins en hydrogène du véhicule (1) et à sa géolocalisation à un module de commande (5),
- c) collecter par au moins un capteur (12) présent dans au moins une station distributrice d'hydrogène (7), au moins un paramètre relatif à l'hydrogène disponible dans la station distributrice d'hydrogène (7),
- d) transmettre ce paramètre relatif à l'hydrogène disponible dans la station distributrice d'hydrogène (7) au module de commande (5), **caractérisé en ce qu'**il comprend au moins les étapes suivantes :
- e) identifier, par le module de commande (5), au moins une station distributrice d'hydrogène (7) pouvant ravitailler le véhicule lors de son déplacement,
- f) informer l'utilisateur du véhicule sur au moins une station distributrice d'hydrogène (7) pouvant ravitailler le véhicule (1) lors de son déplacement et des conditions de ravitaillement en hydrogène dans la station distributrice en hydrogène (7) identifiée.

2. Procédé selon la revendication 1, **caractérisé en ce que** des capteurs (2) de collecte de paramètres relatifs à la charge du véhicule, la pression des pneus, la présence d'une remorque, d'accélération sont embarqués dans le véhicule.

3. Procédé selon la revendication 1, **caractérisé en ce que** le module de commande (5) est hébergé dans un serveur distant des stations distributrices d'hydrogène (7).

4. Procédé selon la revendication 1, **caractérisé en ce que** le module de commande (5) est basé sur une Intelligence Artificielle.

5. Procédé selon la revendication 1, **caractérisé en ce que** lors de l'étape f), une offre de prix de l'hydrogène adaptée aux besoins de l'utilisateur, à la disponibilité de l'hydrogène dans la station (7) suggérée est fournie à l'utilisateur.

6. Procédé selon la revendication 5, **caractérisé en ce que** lors de l'étape f), l'offre de prix tient compte de la présence d'un forfait et des préférences de l'utilisateur concernant le choix de la station distributrice d'hydrogène (7).

7. Procédé selon la revendication 1, **caractérisé en ce que** lors de l'étape f), l'utilisateur est informé lorsqu'il se trouve à une distance définie d'une station distributrice d'hydrogène (7).

8. Procédé selon la revendication 5, **caractérisé en ce qu'**après l'étape f), l'utilisateur informe le module de commande (5) de son choix.

9. Procédé selon la revendication 5, **caractérisé en ce qu'**après l'étape f), l'utilisateur a la possibilité d'informer la station distributrice retenue et de prendre rendez-vous.

## Patentansprüche

1. Verfahren zur Steuerung der Wasserstoffversorgung von Fahrzeugen (1) unterwegs ausgehend von Wasserstoff, der von Tankstellen (7) verteilt wird, **dadurch gekennzeichnet, dass** es die folgenden Schritte umfasst:
- a) Sammeln durch mindestens zwei Sensoren (2, 3), die in einem Fahrzeug (1) mitgeführt sind, von mindestens zwei Parametern bezüglich des Funktionieren und des Fahrens des Fahrzeugs (1) unterwegs, darunter mindestens die Geolokalisierung des Fahrzeugs (1) und sein Bedarf an Wasserstoff,
- b) Übertragen der Parameter bezüglich mindestens des Bedarfs an Wasserstoff des Fahrzeugs (1) und seiner Geolokalisierung an ein Steuermodul (5),
- c) Sammeln durch mindestens einen Sensor (12), der in mindestens einer Wasserstofftankstelle (7) vorhanden ist, mindestens eines Parameters bezüglich des Wasserstoffs, der in der Wasserstofftankstelle (7) verfügbar ist,
- d) Übertragen dieses Parameters bezüglich des Wasserstoffs, der in der Wasserstofftankstelle (7) verfügbar ist, an das Steuermodul (5), **dadurch gekennzeichnet, dass** es mindestens die folgenden Schritte umfasst:
- e) Identifizieren durch das Steuermodul (5) mindestens einer Wasserstofftankstelle (7), die das Fahrzeug unterwegs betanken kann,
- f) Informieren des Benutzers des Fahrzeugs über mindestens eine Wasserstofftankstelle (7), die das Fahrzeug (1) unterwegs betanken kann, und über die Wasserstoffbetankungsbedingungen in der identifizierten Wasserstofftankstelle (7).

2. Verfahren nach Anspruch 1, **dadurch gekennzeichnet, dass** Sensoren (2) zum Sammeln der Parameter bezüglich der Last des Fahrzeugs, des Drucks der Reifen, des Vorhandenseins eines Anhängers, der Beschleunigung in dem Fahrzeug mitgeführt werden.

3. Verfahren nach Anspruch 1, **dadurch gekennzeichnet, dass** das Steuermodul (5) in einem Server, der von den Wasserstofftankstellen (7) entfernt ist, untergebracht ist.

4. Verfahren nach Anspruch 1, **dadurch gekennzeichnet, dass** das Steuermodul (5) auf einer künstlichen Intelligenz basiert.

5. Verfahren nach Anspruch 1, **dadurch gekennzeichnet, dass** dem Benutzer bei dem Schritt f) ein Preisangebot des Wasserstoffs, das an die Bedürfnisse des Benutzers angepasst ist, bei der Verfügbarkeit des Wasserstoffs an der vorgeschlagenen Stelle (7) bereitgestellt wird.

6. Verfahren nach Anspruch 5, **dadurch gekennzeichnet, dass** bei dem Schritt f) das Preisangebot das Vorhandensein einer Pauschale und der Vorlieben des Benutzers bezüglich der Auswahl der Wasserstofftankstelle (7) berücksichtigt.

7. Verfahren nach Anspruch 1, **dadurch gekennzeichnet, dass** der Benutzer bei dem Schritt f) informiert wird, wenn er sich in einer definierten Entfernung von einer Wasserstofftankstelle (7) befindet.

8. Verfahren nach Anspruch 5, **dadurch gekennzeichnet, dass** der Benutzer nach dem Schritt f) das Steuermodul (5) über seine Auswahl informiert.

9. Verfahren nach Anspruch 5, **dadurch gekennzeichnet, dass** der Benutzer nach dem Schritt f) über die Möglichkeit, die ausgewählte Tankstelle zu informieren und einen Termin zu vereinbaren, verfügt.

## Claims

1. A method for managing the hydrogen supply of travelling vehicles (1) from hydrogen dispensed by dispensing stations (7), **characterised in that** it comprises the steps of:
- a) collecting, by at least two sensors (2, 3) on-board a vehicle (1), at least two parameters relative to the operation and the driving of the vehicle (1) during its travel, including at least the geographical location of the vehicle (1) and its hydrogen needs,
- b) transmitting the parameters relative at least to the hydrogen needs of the vehicle (1) and the geographical location thereof to a control module (5),
- c) collecting, by at least one sensor (12) present at least at one hydrogen dispensing station (7), at least one parameter relative to the hydrogen available at the hydrogen dispensing station (7),
- d) transmitting this parameter relative to the hydrogen available at the hydrogen dispensing station (7) to the control module (5), **characterised in that** it comprises at least the following steps:
- e) identifying, by the control module (5), at least one hydrogen dispensing station (7) that can refuel the vehicle during its travel,
- f) informing the vehicle user of at least one hydrogen dispensing station (7) that can refuel the vehicle (1) during its travel and the conditions for refuelling with hydrogen at the identified hydrogen dispensing station (7).

2. The method according to claim 1, **characterised in that** sensors (2) for collecting parameters relative to vehicle load, tyre pressure, the presence of a trailer and acceleration are on-board the vehicle.

3. The method according to claim 1, **characterised in that** the control module (5) is hosted in a server that is remote from the hydrogen dispensing stations (7).

4. The method according to claim 1, **characterised in that** the control module (5) is based on artificial intelligence.

5. The method according to claim 1, **characterised in that** during step f), the user is provided a hydrogen price offer suited to the user's needs and to the hydrogen availability at the suggested station (7).

6. The method according to claim 5, **characterised in that** during step f), the price offer takes into account the presence of a contract and the user's preferences regarding the choice of hydrogen dispensing station (7).

7. The method according to claim 1, **characterised in that** during step f), the user is informed when they are at a predefined distance from a hydrogen dispensing station (7).

8. The method according to claim 5, **characterised in that** after step f), the user informs the control module (5) of their choice.

9. The method according to claim 5, **characterised in that** after step f), the user has the possibility of informing the chosen dispensing station and arranging an appointment.
